# EUROPEAN PATENT SPECIFICATION

(11) **EP 0 318 592 B1**
(45) Date of publication and mention of the grant of the patent: **09.08.1995**
(21) Application number: 88905230.4
(22) Date of filing: 13.06.1988
(51) Int. Cl.: F16H 55/38, F02B 67/06, F01L 1/02, F16H 7/02

(54) **Power transmission system using toothed belt of engine for vehicle**
Zahnriemengetriebe für einen Fahrzeugmotor
Système de transmission de force motrice pour une moteur d'auto utilisant une courroie crantée

(30) Priority: 17.06.1987 JP 92083/87 U; 19.02.1988 JP 21064/88 U
(43) Date of publication of application: 07.06.1989
(73) Proprietor: MITSUBISHI JIDOSHA KOGYO KABUSHIKI KAISHA, Tokyo 108 (JP)
(72) Inventor: MIYAMURA, Noriyuki, Nishikyo-ku, Kyoto-shi Kyoto 610-11 (JP); IWASA, Seizo, Nishikyo-ku, Kyoto-shi Kyoto 610-11 (JP); ASANO, Hiroshi, Nakayada-cho, Kameoka-shi Kyoto 621 (JP); NAGAI, Isamu, Nagaokakyo-shi Kyoto 617 (JP); HAMADA, Hayato, Nishikyo-ku, Kyoto-shi Kyoto 615 (JP); SASAKI, Shuji, Amarube-cho, Kameoka-shi Kyoto 621 (JP); KINOSHITA, Takeshi, Nakayada-cho, Kameoka-shi Kyoto 621 (JP); SUI, Masaru, Uji-shi Kyoto 611 (JP)
(74) Representative: Schwabe, Hans-Georg, Dipl.-Ing.
(86) International application number: PCT/JP88/00563
(87) International publication number: WO 88/10384

(56) References cited:
- FR-A- 2 551 165
- JP-U- 6 140 550
- JP-U- 6 193 654
- JP-U- 6 250 364
- JP-U-53 115 252
- JP-U-56 158 557
- JP-U-60 178 653
- JP-U-60 185 759

## Description

The present invention relates to a power transmission system employing a toothed belt and pulleys around which the toothed belt is trained, according to the peamble of claim 1.

Generally, a train of gears or a coupling means for coupling a gear train and a rotatable shaft is employed to transmit the rotation of a driver shaft to a driven shaft. Such means for transmitting rotative power are however advantageous in that the number of parts required is increased as the distance between the driver and driven shafts becomes larger. On the other hand, a power transmission system using a belt is employed in many applications since it is free from the problem of the increased number of components needed.

A power transmission system using a toothed belt and toothed pulleys, in particular, can reliably keep constant the ratio between the rotational speeds of driver and driven shafts, and is used as a timing belt transmission device for use in an internal combustion engine.

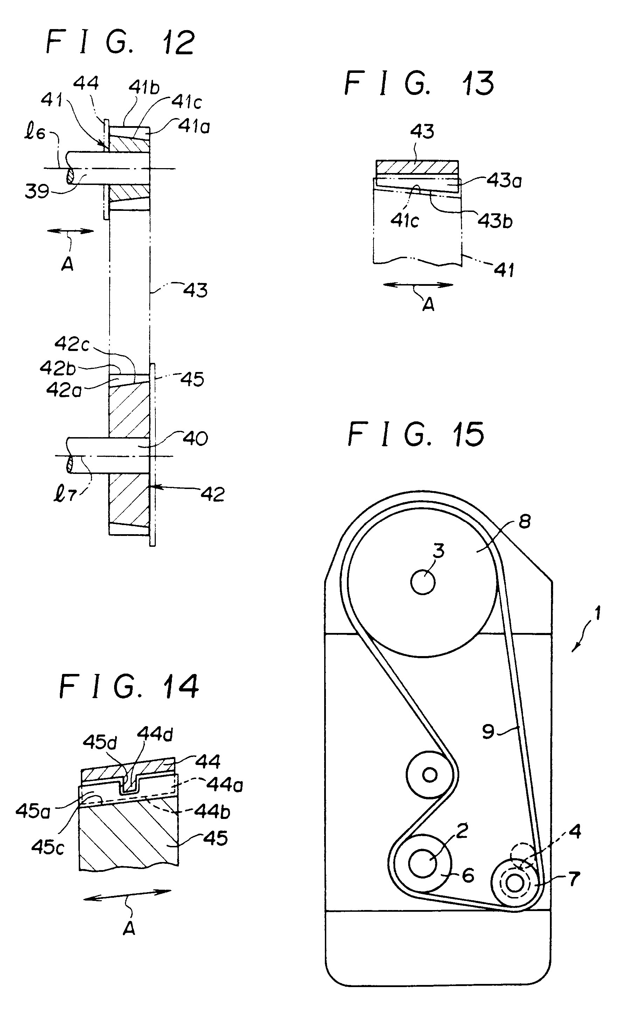

More specifically, as shown in FIG. 15 of the accompanying drawings, an automotive internal combustion engine 1 has a crankshaft 2 projecting from the front wall of the engine. Rotative power from the crankshaft 2 is transmitted through a power transmission system using a toothed belt to a camshaft 3, an oil pump 4, a water pump (not shown), a balancer shaft (not shown), and the like. A pulley 6 mounted as a driver pulley on the crankshaft 2 transmits its rotative power through a toothed belt 9 to driven pulleys 7, 8 coupled to the accessories.

The tooth profile of the pulleys and toothed belt of the toothed belt transmission system is selected such that any loss of the rotative power transmitted between the pulleys and toothed belt when they mesh with each other will be minimized. Specifically, the tooth profile which is used should allow the pulley and the toothed belt to start meshing with each other simultaneously over entire meshing teeth in their longitudinal direction and also should prevent the meshing teeth from being displaced relatively to each other in their longitudinal direction. To meet these requirements, the teeth of conventional pulleys and toothed belts have had tooth profiles parallel to the longitudinal direction of the teeth, e.g., spur gear tooth profiles.

The problems to be solved by the present invention will be described below.

The belt is subject to large tension over the span between the pulley 6 on the crankshaft 2 and the pulley 7 adjacent thereto for driving an accessory. Between the pulleys 6, 7 and the toothed belt 9, intermeshing teeth start meshing with each other simultaneously over their entire longitudinal areas to transmit rotative power. When these teeth of the belt and the pulleys mesh with each other, however, the intermeshing teeth hit each other and produce impact sounds, which vary with the rotational speeds of the pulleys.

The impact sounds are liable to amplify the vibration of the teeth belt 9, and the toothed belt 9 gives off noise due to resonance thereof upon the amplified vibration, resulting in a shortened belt life.

Japanese Utility Model Publication No. 55-19324 disclosed an improved power transmission system using a toothed belt. With the disclosed power transmission system, when a belt and a pulley start to mesh with each other, the tip of a tooth of the belt engages into a tooth groove in the pulley while the tooth tip is being elastically deformed. Then, a tooth tip of the pulley and the bottom of a tooth groove in the belt engage each other in a final period of the meshing cycle. The impact between the tooth tip of the pulley and the bottom of the tooth groove in the belt, which has maximized the level of the hitting sounds, can be dampened beforehand by the elastic deformation of the tooth of the belt.

However, the teeth of the pulley and belt are still nevertheless caused to start meshing with each other in the entire longitudinal direction of the teeth, and hence the level of the impact sounds produced when the teeth mesh each other cannot sufficiently be suppressed.

A further power transmission system is known from JP-U-62-50364. In this known system a timing pulley is fixed at one end to a crank shaft so as to receive a belt. The teeth of the timing pulley are formed so as to taper in such a way that the diameter of the timing pulley is getting smaller in the direction of the extension of the crank shaft. In this arrangement the toothed belt does not mesh with one end of the pulley before meshing with the other end of the pulley.

This known construction has the shortcoming that impact sounds produced with the meshing operation of this system cannot be reduced.

Therefore, it is a first object of the present invention to provide a power transmission system using a toothed belt, which can greatly reduce impact sounds that are produced when teeth mesh with each other and also suppress noise caused by belt vibration. A second object of the present invention to provide a power transmission system using a toothed belt, which can employ many tooth profiles with increased design freedom as teeth for reducina impact sounds.

These objects are solved by the system comprising the features listed in claim 1.

A usefull embodiment is defined by the subclaim.

Rotative power from a driver pulley mounted on a driver shaft is transmitted at a prescribed rotational speed ratio to a driven pulley through a toothed belt.

The driver and driven pulleys have teeth for meshing with teeth of the toothed belt. The tooth tips of the teeth of at least the driven pulley lie in a plane including a central axis of rotation of the driven pulley and are inclined with respect to the central axis. The meshing engagement between the teeth of the driven pulley and the toothed belt is progressively displaced in the longitudinal direction of the teeth, thus reducing the level of impact sounds produced when the teeth mesh with each other, the vibration of the toothed belt, and noise thereof.

Moreover, the tooth bottoms of the teeth of the driven pulley lie in a plane including a central axis of rotation of the driven pulley and are inclined with respect to the central axis. This arrangement is also effective to reduce impact sounds produced when the teeth mesh with each other, and noise due to the vibration of the belt. The tooth profile of the teeth of the pulleys can be designed with greater freedom in many configurations.

The invention will be explained subsequently in more detail with respect to the accompanying drawings, in which:
FIG. 1 is a fragmentary side elevational view, partly broken away, of an engine incorporating a power transmission system using a toothed belt according to the present invention;
FIG. 2 is an enlarged cross-sectional view of a tapered pulley shown in FIG. 1;
FIG. 3 is a front elevational view, partly cut away, of the engine shown in FIG. 1;
FIG. 4 is a view showing the manner in which a toothed belt and the tapered pulley of FIG. 1 mesh with each other;
FIGS. 5(a) and 5(c) are graphs showing different characteristics curves each indicating the relationship between a span vibration level and an engine rotational speed according to an existing power transmission system using a toothed belt;
FIGS. 5(b) and 5(d) are graphs showing different characteristics curves each indicating the relationship between a span vibration level and an engine rotational speed according to the power transmission system shown in FIG. 1;
FIG. 6 is a graph illustrating, for comparison, noise levels of the power transmission system of FIG. 1 and the existing power transmission system, dependent on the engine rotational speed;
FIGS. 7(a) and 7(b) are graphs showing frequency vs. noise level characteristic curves at different measuring positions of the power transmission system illustrated in FIG. 1;
FIG. 8 is a graph showing a frequency vs. noise level characteristic curve of another power transmission system according to the present invention;
FIGS. 9 and 12 are fragmentary cross-sectional views of other different power transmission systems according to the present invention;
FIGS. 10(a), 10(b), 10(c), and 10(d) are cross-sectional views showing the manner in which a toothed belt shown in FIG. 9 operates at different positions;
FIG. 11 is a fragmentary exploded cross-sectional view of still another power transmission system with a toothed belt in accordance with the present invention;
FIG. 13 is an enlarged cross-sectional view showing a region where a belt and a pulley shown in FIG. 12 mesh with each other;
FIG. 14 is a fragmentary cross-sectional view of a means for preventing a belt from being displaced according to another embodiment of the present invention; and
FIG. 15 is a schematic front elevational view of a conventional power transmission system using a toothed belt. Best Mode For Carrying Out the Invention:

Embodiments of the present invention will hereinafter be described with reference to the drawings.

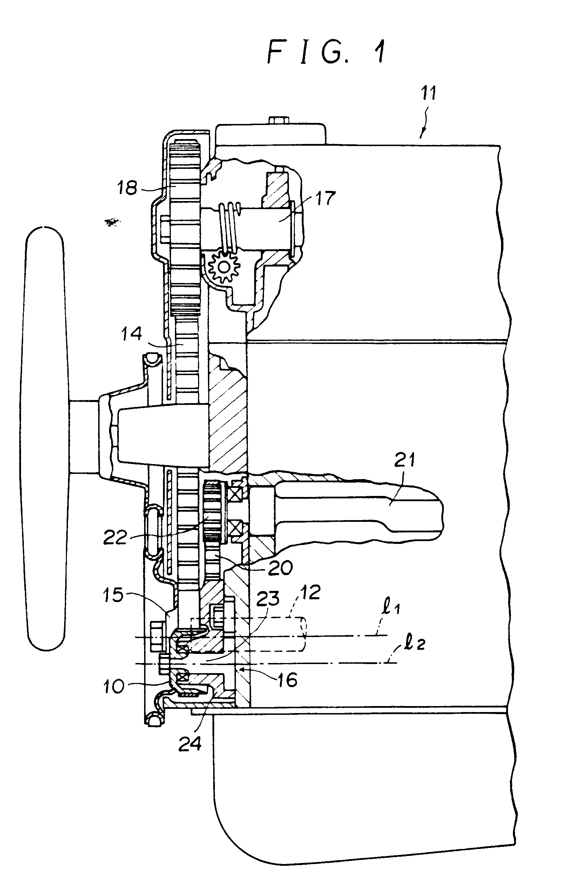

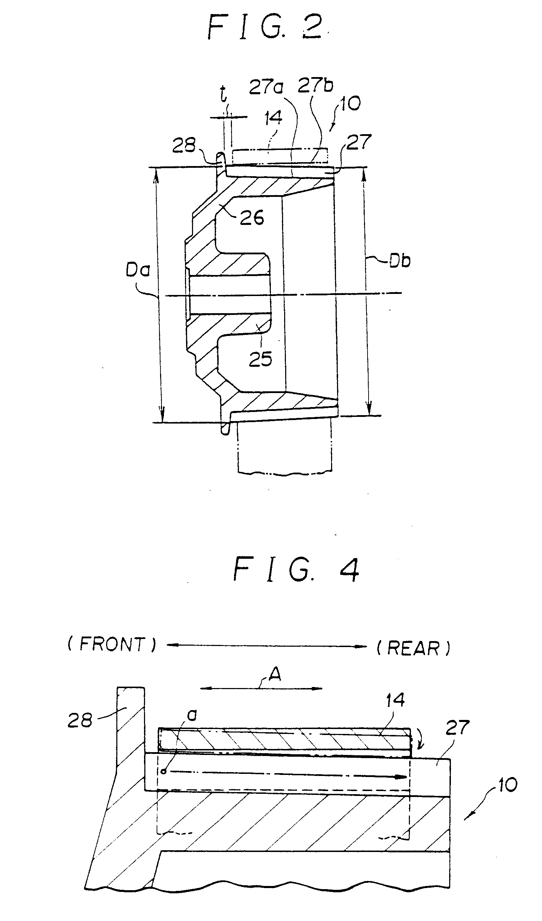

FIG. 1 shows in sectional side elevation a power transmission system using a toothed belt, which is mounted on a vehicle engine 11. FIG. 2 illustrates in enlarged cross section an oil pump pulley (hereinafter referred to simply as a "tapered pulley") 10 as a driven pulley.

The vehicle engine 11 has a crankshaft 12 projecting beyond a front wall of the engine body, and a crank pulley 15 is mounted as a driver pulley on the projecting end of the crankshaft 12. The crankshaft 12 is rotatable about its own central axis ℓ₁. A second pulley 19 is also mounted on the crankshaft 12 in coaxial relation to the crank pulley 15. Various accessories of the engine can be driven by these pulleys on the crankshaft 12.

The power transmission system according to the present invention includes the crank pulley 15, the tapered pulley 10, a timing gear 18 fixedly mounted on a camshaft 17, and a toothed belt 14 trained around these pulleys. Rotative power from the crankshaft 12 is transmitted by the toothed belt 14 to the camshaft 17 and also to an oil pump 16 as an engine accessory.

The engine 11 has a balancer shaft 21 for canceling out vibration produced during rotation of the engine. The balancer shaft 21 is driven by a second toothed belt 20 which is trained around the second pulley 19 and a balancer shaft pulley 22 mounted on the balancer shaft 21.

The toothed belt 14 has a series of spur gear teeth on its entire inner peripheral surface, and is made as a timing belt of known reinforced rubber.

The crank pulley 15 and the timing gear 18 have spur gear teeth shaped to mesh with the teeth on the entire inner peripheral surface of the toothed belt 14.

The tapered pulley 10 is securely mounted on a driven shaft 23 which is rotatably supported in a bearing 24 in the engine and which has an end for driving the pump 16. As shown in FIG. 2, the tapered pulley 10 comprises a boss 25, a rim 26, teeth 27 for meshing with the toothed belt 14, and a flange 28, which are integrally made of a sintered alloy. The teeth 27 have tooth tips 27b each lying in a plane containing the central axis ℓ₂ of rotation of the shaft 23 and inclined with respect to the central axis ℓ₂. Therefore, each tooth tip 27b revolves along a tapered circular path having a frustoconical shape. Stated otherwise, the portion of the pulley which has the tooth tips 27b thereon has a front outside diameter Da near the flange 28 and an axially opposite rear outside diameter Db that is smaller than the front outside diameter Da. In the illustrated embodiment, the tooth tips 27b and tooth bottoms 27a of the teeth 27 are greater in radius at their front ends than at their rear ends by 0.4 mm (with the width of each tooth being 22 mm).

The extent and direction of the taper of the teeth 27 vary from engine type to engine type and are of experimentally selected values. It is preferable that the extent of the taper of the teeth be in the range of from 1/15 to 1/40 in view of desired noise level and belt durability.

In FIG. 2, the flange 28 is disposed on the front larger-diameter side of the tapered pulley 10. The flange 28 is formed as a means for preventing the belt 14 from being displaced in the longitudinal directions of the teeth which are indicated by the arrow A.

More specifically, when the toothed belt 14 mesh with the tapered pulley 10, the direction of the central line of the toothed belt 14 becomes continuously varied between meshing and unmeshing portions of the belt 14, and the toothed belt 14 tends to move toward the flange 28 on the larger-diameter side thereof.

In order to minimize the amount of such movement of the belt 14 on the tapered pulley 10, the flange 28 is positioned so that the distance t of the flange 28 from the end face of the belt 14 in its nominal position will be 2.0 mm or less.

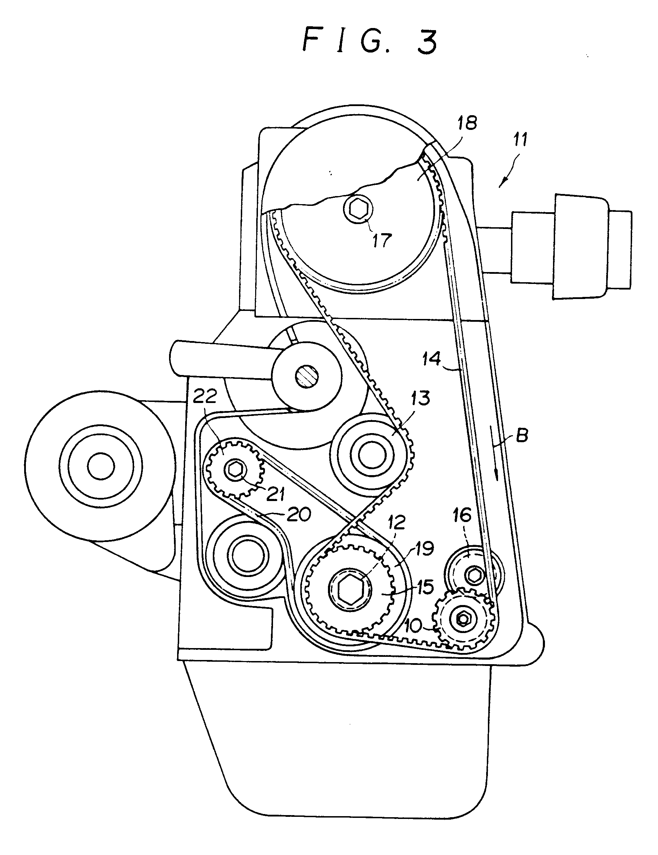

In FIG. 3, an idler 13 serves to remove any slack from the toothed belt 14.

Upon operation of the engine 11, the power transmission system transmits the rotative power of the crankshaft 12 to the tapered pulley 10 and the timing gear 18. At this time, the toothed belt 14 is rotated clockwise as indicated by the arrow B in FIG. 3.

The span of the belt 14 between the crank pulley 15 and the tapered pulley 10, which is apt to cause noise, is on the tensioned side, and the span thereof between the crank pulley 15 and the timing gear 18 is on the slackened side.

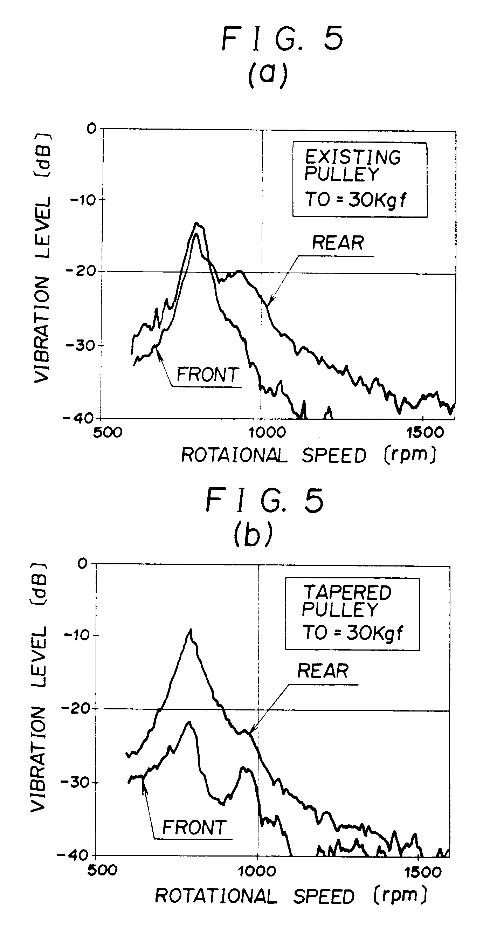

As illustrated in FIG. 4, the teeth of the tapered pulley 10 which is the driven pulley and the teeth of the toothed belt 14 start meshing with each other in a front position a in the longitudinal direction A of the teeth, and then the meshing region expands progressively toward the rear side until the teeth mesh with each other fully across the tooth width in the longitudinal direction A. Since the teeth begin to mesh with and abut against each other in their partial regions, any impact sounds produced at this time are held to a minimum. Thereafter, the position where the teeth abut against each other due to their meshing engagement is progressively displaced toward the rear side. Accordingly, the progressively repeated meshing engagement of the teeth is dispersed within a prescribed period of time, with the result that the level of the impact sounds due to the meshing engagement of the teeth is reduced to a relatively low level. Since the radius of the tapered pulley is continuously varied, the toothed belt is subjected to a distribution of different tensions in the transverse direction of the belt (i.e., in the longitudinal direction of the teeth), and the tapered pulley has different resonant rotational speeds at front and rear positions thereon. Therefore, the resonance of the entire span is not simultaneously generated, and is reduced. Inasmuch as the belt undergoes different tensions thereacross, torsional forces are applied to the belt across the width or in the transverse direction thereof, and are imposed as resistive forces against lateral vibrations, dampening the resonance. The reduction of the impact sounds, the prevention of the belt resonance, and the prevention of the lateral belt vibration are effective in reducing the noise level of the power transmission system, particularly in reducing noise (cycling sounds) when the engine is idling.

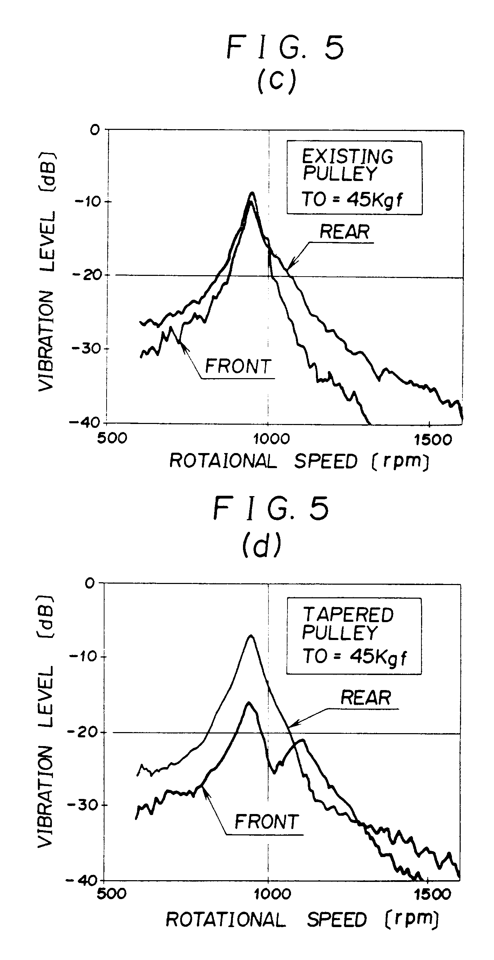

Experimental data obtained by the inventor will be described below. FIGS. 5(a), 5(b), 5(c), and 5(d) show measured data on the relationship between the span vibration level and the engine rotational speed. The same type of engine as shown in FIG. 1 was employed, and the vibration levels (primary frequency component upon meshing engagement) at the center of the span of the tapered pulley and the crank pulley were measured. The data shown in FIGS. 5(b) and 5(d) were obtained when a tapered pulley was mounted, and the data of FIGS. 5(a) and 5(c) were obtained when an existing pulley (not shown) having spur gear teeth was mounted.

The data of FIGS. 5(a) and 5(b) were produced when the belt tension TO was 30 kgf, and indicate that the vibration level at the front side is much lower with the tapered pulley than with the existing pulley at the engine speed of 700 rpm. The data of FIGS. 5(c) and 5(d) were produced when the belt tension TO was 45 kgf, and indicate that the vibration level at the front side is much lower with the tapered pulley than with the existing pulley at the engine speed of 900 rpm.

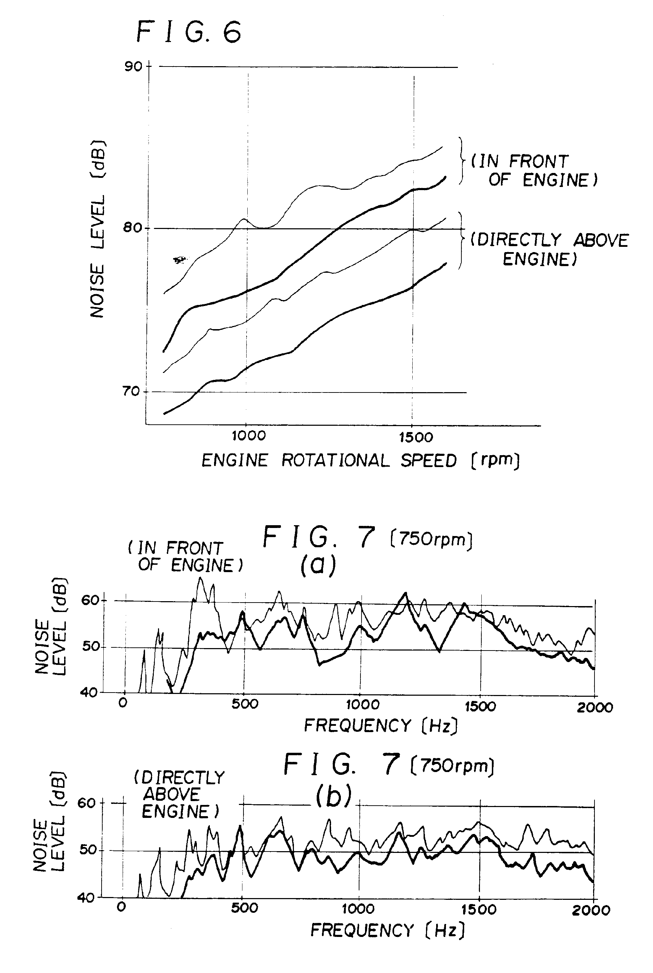

FIG. 6 shows, for comparison, experimental data representing noise levels when the existing pulley was used (thinner solid lines) and when the tapered pulley was used (thicker solid lines), dependent on the engine rotational speed. It can readily be seen from FIG. 6 that the noise level can be reduced by using the tapered pulley either immediately above or in front of the engine. FIGS. 7(a) and 7(b) show data which were obtained in the same manner as the data of FIG. 6. The data of FIGS. 7(a) and 7(b) represent the vibration frequency (Hz) vs. noise level characteristic curves while the engine speed is maintained at an idling speed (750 rpm). As is apparent from FIGS. 7(a) and 7(b), the noise level is lower when the tapered pulley is used than when the existing pulley is used, in substantially the full range of vibration frequencies Hz.

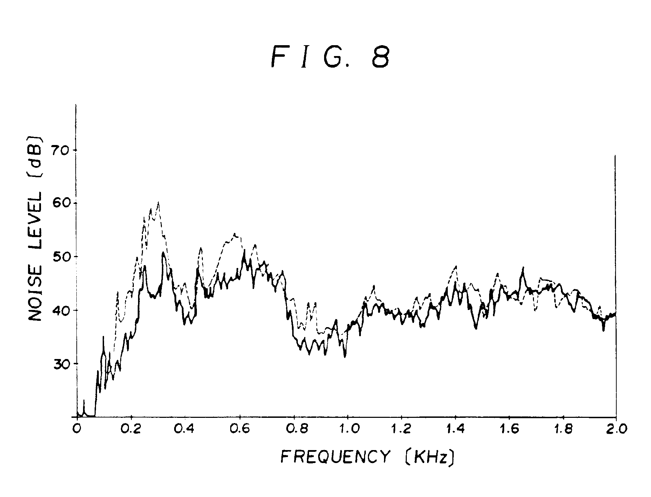

FIG. 8 illustrates experimental data obtained when a power transmission system using a toothed belt is mounted on an engine similar to the engine of FIG. 1. The illustrated frequency-dependent noise level was measured above the engine when the tapered pulley used had a front and rear taper of 1/28 mm and the engine rotational speed was 750 rpm. It is clear in FIG. 8 that the noise level (indicated by the solid line) when the tapered pulley was used is lower as a whole than the noise level (indicated by the broken line) when the existing pulley was used. In particular, the noise which is produced during engine idling due to such resonance of the belt span between the crank pulley and the tapered pulley which is liable to happen at the primary frequency (here about 300 Hz) is greatly reduced in level.

In the above embodiment, the tapered pulley 10 has a smaller radius at its rear end than at its front side. However, the tapered pulley 10 may be tapered in the opposite direction to provide the flange 28 on the rear larger-diameter end thereof. While the teeth 27 of the tapered pulley 10 are tapered fully in the longitudinal direction A of the teeth in the illustrated embodiment, the tapered pulley may have spur gear teeth on the larger-diameter side and tapered teeth extending continuously from the spur gear teeth.

In the power transmission system shown in FIG. 1, only the tooth tips of the driven tapered pulley 10 are tapered to follow a frustoconical path when the tapered pulley 10 rotates. However, the tooth tips of the driver crank pulley 15 may also be tapered to follow a frustoconical path.

The flange 28 on the front larger-diameter end of the tapered pulley 10 in the power transmission system shown in FIG. 1 may be dispensed with. With such an alternative, a flanged idler (not shown) may be provided between the driver and driven pulleys for preventing the belt from being displaced transversely to limit belt displacement on the pulleys.

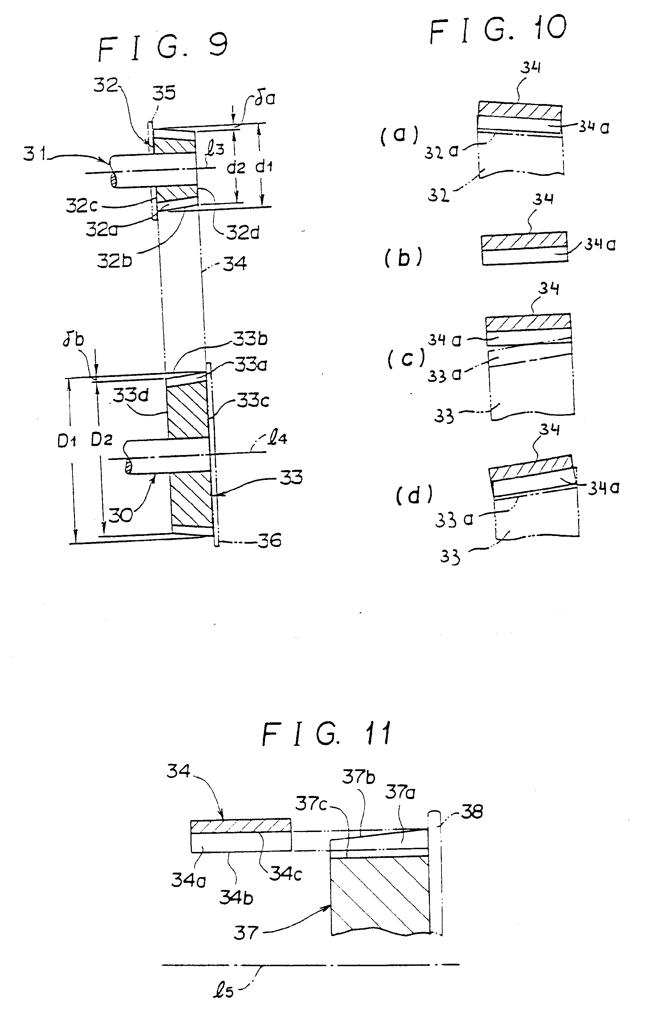

FIG. 9 shows a power transmission system using a toothed belt according to another embodiment of the present invention.

The power transmission system of FIG. 9 is also constructed to transmit rotative power from a crankshaft 31 to a cam shaft 30 in a valve operating mechanism of an engine (not shown).

A timing belt pulley 32 is mounted as a driver pulley on the crankshaft 31, and a timing belt pulley 33 is mounted as a driven pulley on the camshaft 30, with a toothed belt 34 being trained around the pulleys 32, 33.

The timing belt pulley 32 has teeth 32a with their tooth tips 32b each lying in a plane containing the central axis ℓ₃ of rotation of the pulley 32 and inclined with respect to the central axis ℓ₃. Therefore, each tooth tip 32b revolves along a tapered circular path having a frustoconical shape. The timing belt pulley 32 is securely mounted on a distal end of the crankshaft 31 with the larger-diameter portion of the pulley 32 on an inner side and the smaller-diameter portion thereof on an outer side.

The timing belt pulley 32 has an end 32c on the larger-diameter portion thereof, the end 32c having a diameter d₁, and an opposite end 32d on the smaller-diameter portion thereof, the end 32d having a diameter d₂. The difference δa between these radii is about 0.25 mm (with the width of each tooth being about 20 mm).

The timing belt pulley 33 has teeth 33a with their tooth tips 33b each lying in a plane containing the central axis ℓ₄ of rotation of the pulley 33 and inclined with respect to the central axis ℓ₄. Therefore, each tooth tip 33b revolves along a tapered circular path having a frustoconical shape. The timing belt pulley 33 is securely mounted on a distal end of the camshaft 30 with the larger-diameter portion of the pulley 33 on an outer side and the smaller-diameter portion thereof on an inner side.

The timing belt pulley 33 has an end 33c on the larger-diameter portion thereof, the end 33c having a diameter D₁, and an opposite end 33d on the smaller-diameter portion thereof, the end 33d having a diameter D₂. The difference δd between these radii is about 0.4 mm (with the width of each tooth being about 20 mm).

The amounts of the tapers of the timing belt pulleys 32, 33, i.e., 1/40 and 1/25, fall within the aforesaid preferable range of from 1/15 to 1/40 for reducing the noise level and keeping desired belt durability.

The toothed belt 34 has teeth 34a which are slightly lower than the teeth 32a, 33a of the timing belt pulleys 32, 33 by about 0.15 mm. This arrangement prevents the timing belt 34 from rising out of meshing engagement with the timing belt pulleys 32, 33.

Operation of the power transmission system shown in FIG. 9 will be described below.

When the engine is operated, the crankshaft 31 is rotated, and the rotation of the crankshaft 31 is transmitted via the timing belt pulley 32, the toothed belt 34, and the timing belt pulley 33 to the camshaft 30 to rotate the camshaft 30. At this time, the teeth 32a, 33a of the timing belt pulleys 32, 33 and the teeth 34a of the timing belt 34 mesh with each other as shown in FIG. 10.

While the timing belt 34 is in mesh with the timing belt pulley 32, the timing belt 34 is slightly inclined (downwardly to the right) along the taper of the timing belt pulley 32 as shown in FIG. 10(a). Immediately after the timing belt 34 has left the timing belt pulley 32, the timing belt 34 remains inclined in the same manner as when it is in mesh with the pulley 32. As the timing belt 34 goes progressively away from the timing belt pulley 32, the inclination of the timing belt 34 is gradually eliminated until it lies substantially horizontally as shown in FIG. 10(b).

Then, the timing belt 34 as it lies horizontally reaches the teeth 33a of the timing belt pulley 33. Since the teeth 33a are inclined in the opposite direction to the teeth 32a, the timing belt 34 starts meshing with the timing belt pulley 33 progressively from the righthand end thereof toward the lefthand end as shown in FIG. 10(c). Therefore, in an initial period of the meshing engagement, the teeth of the timing belt 34 and the timing belt pulley 33 start engaging each other partially, thus holding impact sounds to a minimum. Then, the position where these teeth engage each other is progressively moved to the left. Therefore, any impact sounds are produced dispersely and hence are lessened.

When the timing belt 34 leaves the timing belt pulley 33 and meshes with the timing belt pulley 32, the teeth 34a of the timing belt 34 also mesh with the teeth 32a of the timing belt pulley 32 progressively and dispersely in the longitudinal direction A of the teeth, so that impact sounds are reduced upon meshing engagement therebetween. Accordingly, any noise produced when the timing belt 34 and the timing belt pulleys 32, 33 are brought into and out of mesh with each other is largely reduced.

Since the timing belt 34 between the timing belt pulleys 32, 33 is inclined and twisted, the rigidity of the timing belt 34 is increased to provide resistive forces against the generation of vibration, thereby preventing the timing belt 34 from resonating.

In FIG. 9, the tooth tips 32b, 33b of the driver timing belt pulley 32 and the driven timing belt pulley 33 are inclined in the opposite directions. Rather, the tooth tips 32b, 33b of the pulleys 32, 33 may be inclined in the same direction to provide the same operation and advantages as those of the power transmission system illustrated in FIG. 9.

With the power transmission system of FIG. 9, the timing belt pulleys 32, 33 have no means for preventing the belt from being displaced, but a means (not shown) for preventing the belt from being displaced, such as a flanged idler, is provided in a position confronting the toothed belt 34. However, flanges 35, 36 indicated by the two-dot-and-dash lines in FIG. 9 may be disposed on the larger-diameter ends of the timing belt pulleys 32, 33, and the other means for preventing the belt from being displaced may be dispensed with.

The teeth of the tapered pulley 10 and the timing belt pulleys 32, 33 in the power transmission systems shown in FIGS. 1 and 9 have constant heights, and their tips and bottoms lie in the planes including the central axes ℓ₁, ℓ₂, ℓ₃, ℓ₄ and are inclined to these central axes. However, a timing belt pulley 37 having teeth 37a as shown in FIG. 11 may be employed.

The timing belt pulley 37 illustrated in FIG. 11 has teeth 37a each including a tooth tip 37b inclined to a central axis ℓ₅ of rotation of the pulley 37 and a tooth bottom 37c extending parallel to the central axis ℓ₅. With this arrangement, tooth bottoms 34c of the timing belt pulley 34 are brought into progressive mesh with the tooth tips 37b of the timing belt pulley 37.

The timing belt pulley 37 can attenuate impact sounds produced when the teeth mesh with each other, and can also be machined easily when it is manufactured. The timing belt 37 may have an integral flange 38 (indicated by the two-dot-and-dash lines) on its larger diameter end for preventing the belt from being displaced.

FIG. 12 shows a power transmission system using a toothed belt in accordance with still another embodiment of the present invention.

The power transmission system of FIG. 12 is the same as the power transmission system shown in FIG. 9 in that it can transmit rotative power from a crankshaft 39 to a camshaft 40 in a valve operating mechanism, but has differently shaped teeth on a pair of pulleys.

A toothed belt 43 is trained around a driver timing belt pulley 41 fixedly mounted on a crankshaft 39 and a driven timing pulley 41 fixedly mounted on a camshaft 40.

The timing belt pulley 41 has teeth 41a each including a tooth tip 41b lying in a plane including a central axis ℓ₆ of rotation of the pulley 41 and extending parallel to the central axis ℓ₆, and also including a tooth bottom 41c lying in a plane including the central axis ℓ₆ and inclined to the central axis ℓ₆. Thus, the tooth bottoms 41c follow a frustoconical path of a tapered shape when rotated.

The timing belt pulley 42 has teeth 42a each including a tooth tip 42b lying in a plane including a central axis ℓ₇ of rotation of the pulley 42 and extending parallel to the central axis ℓ₇, and also including a tooth bottom 42c lying in a plane including the central axis ℓ₇ and inclined to the central axis ℓ₇. Thus, the tooth bottoms 42c follow a frustoconical path of a tapered shape when rotated.

The amounts of the tapers of the timing belt pulleys 41, 42 fall within the aforesaid preferable range of from 1/15 to 1/40. The teeth 41a, 42a of the timing belt pulleys 41, 42 are slightly lower than the teeth 43a of the toothed belt 43.

When the tooth tip 43b of the toothed belt 43 is positioned in confronting relation to the timing belt pulley 41 or 42 so as to mesh therewith, as shown in FIG. 13, the tooth tip 43b engages a shallower portion of the tooth bottom 41c or 42c of the timing belt pulley, thus starting to mesh with the timing belt pulley. Therefore, impact sounds during an initial period of meshing engagement are held to a minimum. Then, the position where the tooth tip 43b starts engaging the tooth bottom 41c, 42c is progressively moved toward a deeper portion of the tooth bottom 41c, 42c, so that the impact sounds are produced dispersely. At this time, the teeth 43a of the toothed belt 43 which engage the shallower portion of the tooth bottom 41c, 42c is elastically deformed to a large degree, thereby lessening the impact sounds.

With the power transmission system shown in FIG. 12, the amounts of the tapers of the paths followed by the tooth bottoms 41c, 42c of the timing belt pulleys 41, 42 are small. In addition, the portions of the teeth of the toothed belt 43 which confront the shallower portions of the tooth bottoms 41c, 42c are elastically deformed to a large degree. Consequently, the toothed belt 43 is substantially not inclined with respect to the central axes ℓ₆, ℓ₇, and is substantially not displaced in the longitudinal direction A of the teeth.

The power transmission system of FIG. 12 has a means (not shown) for preventing the belt from being displaced in a position remote from the timing belt pulleys 41, 42.

Alternatively, the pulleys may have flanges 44, 45, respectively, as indicated by the two-dot-and-dash lines in FIG. 12, and the other means for preventing the belt from being displaced may be dispensed with.

In the power transmission system of FIG. 12, the paths followed by the tooth bottoms 41c, 42c of the timing belt pulleys 41, 42 when rotated are of a tapered shape. However, only the path followed by the tooth bottom 42c of the driven timing belt pulley 42 which produce relatively large noise may have a tapered configuration.

The tooth bottoms 41c, 42c of the timing belt pulleys 41, 42 of the power transmission system shown in FIG. 12 are inclined in the opposite directions. Instead, the tooth bottoms 41c, 42c of the pulleys 41, 42 may be inclined in the same direction. Such an alternative construction can also provide the same operation and advantages as those of the power transmission system of FIG. 12.

In the above arrangements, the flanges 28, 35, 36, 38, 44, 45 have been described as means on the pulleys for preventing the belt from being displaced. FIG. 14 shows an alternative structure in which an annular ridge 44d is provided on an inner peripheral surface of a toothed belt 44 so as to extend through teeth 44a of the belt 44, and recesses 45d are defined in teeth 45a of a pulley 45 as a means for preventing the belt from being displaced. The annular ridge 44a has a height smaller than the height of tooth tips 44b of the belt 44, and the recesses 45d have a depth smaller than the depth of tooth bottoms 45c of the teeth 45a.

The belt 44 can be prevented from being displaced in the longitudinal direction A of the teeth, by the recesses 45d as the means for preventing the belt from being displaced, and the annular ridge 44d engaging in the recesses 45d.

The present invention thus arranged offer the following advantages:

With the power transmission system of the invention, the meshing engagement between the teeth of the toothed belt and the teeth of at least the driven pulley is not effected simultaneously in the full longitudinal region of the teeth, but is performed progressively in the longitudinal direction of the teeth. Therefore, any impact sounds produced when the teeth mesh with each other are dispersed, lessened, and lowered in level. Moreover, the progressive meshing of the belt and the pulley, and a change in the belt rigidity due to different tensions on the belt in the transverse direction thereof are effective as resistive forces to cancel out resonance of the belt for lowering noise which would otherwise be caused by belt resonance, in particular, cycling sounds when the engine is idling. The reduction in resonance of the belt results in increased durability of the toothed belt.

In addition, since the teeth of the driver and driven pulleys can be shaped with increased freedom, it is possible to select pulleys and a belt which are best suited to each power transmission system desired, and those which are most effective in reducing noise.

### Industrial Applicability:

The power transmission system using a toothed belt according to the present invention is highly useful as a system for transmitting rotative power from a crankshaft to a valve operating mechanism of an engine, and can effectively be used as a rotative power transmission system in which the ratio of rotational speeds of two shaft should be kept constant.

## Claims

1. A power transmission system using a toothed belt (14) of a vehicle engine, comprising:
a toothed drive pulley (15) mounted on a drive shaft (12) of an engine, having tooth tips lying in a plane parallel with a rotational axis of said drive pulley (15), said drive pulley having tapered tooth tips;
a toothed driven pulley (10) mounted on a driven shaft (23), having tooth tips tapered so that the diameter of said driven pulley (10) at one axial end thereof is larger than the diameter thereof at the other axial end thereof;
**characterized** by a guide (28) disposed at said one axial end of said toothed driven pulley (10) and having a diameter larger than any diameter of said toothed driven pulley (10), whereby when said toothed belt (14) is rotated by the drive force of said drive shaft (12), said toothed belt (14) sequentially meshes with said toothed driven pulley (10) from the larger diameter portion thereof to the smaller diameter portion thereof, thereby transmitting the drive force of said drive shaft (12) to said toothed driven pulley (10).

2. A power transmission system according to claim 1, **characterized** in that said toothed belt (14) has spur gear teeth.

## Patentansprüche

1. Kraftübertragungssystem, das einen Zahnriemen (14) eines Fahrzeugmotors benutzt, mit:
einer an einer Antriebswelle (12) eines Motors angebrachten Antriebs-Zahnscheibe (15), die Zahnspitzen aufweist, die in einer zur Drehachse der genannten Antriebsscheibe (15) parallelen Ebene liegen, wobei die genannte Antriebsscheibe abgeschrägte Zahnspitzen aufweist;
einer an einer angetriebenen Welle (23) angebrachten angetriebenen Zahnscheibe (10), die Zahnspitzen aufweist, die so abgeschrägt sind, daß der Durchmesser der genannten angetriebenen Scheibe (10) an ihrem einen axialen Ende größer ist als ihr Durchmesser an ihrem anderen axialen Ende;
**gekennzeichnet** durch eine Führung (28), die am genannten einen axialen Ende der genannten angetriebenen Zahnscheibe (10) angeordnet ist und einen Durchmesser aufweist, der größer ist als irgendein Durchmesser der genannten angetriebenen Zahnscheibe (10), wodurch dann, wenn der genannte Zahnriemen (14) durch die Antriebskraft der genannten Antriebswelle (12) in Umlauf gebracht ist, der genannte Zahnriemen (14) mit der genannten angetriebenen Zahnscheibe (10) von deren Abschnitt mit größerem Durchmesser bis zu deren Abschnitt mit kleinerem Durchmesser aufeinanderfolgend kämmt, um hierdurch die Antriebskraft der genannten Antriebswelle (12) auf die genannte angetriebene Zahnscheibe (10) zu übertragen.

2. Kraftübertragungssystem nach Anspruch 1, dadurch **gekennzeichnet,** daß der genannte Zahnriemen (14) Stirnradzähne bzw. Stirnradgetriebezähne aufweist.

## Revendications

1. Système de transmission de force motrice utilisant une courroie crantée (14) d'un moteur de véhicule, comprenant:
une roue dentée d'entraînement (15) montée sur un arbre d'entraînement (12) d'un moteur, les pointes des dents se trouvant dans un plan parallèle à l'axe de rotation de ladite roue d'entraînement (15), ladite roue d'entraînement ayant des pointes de dents coniques;
une roue dentée menée (10) montée sur un arbre mené (23), ayant des pointes de dents coniques de façon que le diamètre de ladite roue menée (10) à une première extrémité axiale de celle-ci soit plus grand que son diamètre à l'autre extrémité axiale de celle-ci;
**caractérisé** par un guide (28) disposé à ladite première extrémité axiale de ladite roue dentée menée (10) et ayant un diamètre supérieur à tout diamètre de ladite roue dentée menée (10), grâce à quoi, lorsque ladite courroie crantée (14) est entraînée en rotation par la force motrice dudit arbre d'entraînement (12), ladite courroie crantée (14) engrène successivement avec ladite roue dentée menée (10) depuis la partie à plus grand diamètre de celle-ci jusqu'à la partie à plus petit diamètre de celle-ci, en transmettant de ce fait à ladite roue dentée menée (10) la force dudit arbre d'entraînement (12).

2. Système de transmission de force motrice selon la revendication 1, **caractérisé** en ce que ladite courroie crantée (14) a une denture de roue droite.
